# EUROPÄISCHE PATENTSCHRIFT

(11) **EP 2 212 126 B1**
(45) Veröffentlichungstag und Bekanntmachung des Hinweises auf die Patenterteilung: **30.03.2011**
(21) Anmeldenummer: 08804588.5
(22) Anmeldetag: 23.09.2008
(51) Int. Cl.: B60C 15/024

(54) **FAHRZEUGLUFTREIFEN**
PNEUMATIC VEHICLE TIRE
PNEUMATIQUE POUR VÉHICULE

(30) Priorität: 18.10.2007 DE 102007049943
(43) Veröffentlichungstag der Anmeldung: 04.08.2010
(73) Patentinhaber: The Goodyear Tire & Rubber Company, Akron, OH 44316-0001 (US); Sumitomo Rubber Industries, Ltd., Kobe-shi, Hyogo 651-0072 (JP)
(72) Erfinder: RIEGEL, Joachim, 63796 Kahl (DE); NISHI, Minoru, Kobe, 651-2275 (JP); HÄRING, Anton, 63457 Hanau (DE)
(74) Vertreter: Kutsch, Bernd
(86) Internationale Anmeldenummer: PCT/EP2008/062669
(87) Internationale Veröffentlichungsnummer: WO 2009/053193

(56) Entgegenhaltungen:
- EP-A- 0 540 492
- JP-A- 5 077 615
- JP-A- 6 312 605
- JP-A- 54 108 302
- JP-A- 2007 160 983

## Beschreibung

Die vorliegende Erfindung betrifft einen Fahrzeugluftreifen, insbesondere Notlaufreifen, mit einer Karkasse, einem Laufstreifen und zwei jeweils einen Wulstkern aufweisenden Reifenwulsten, die zur Festlegung des Reifens in einer zugeordneten Felge ausgebildet sind, indem der Wulst mit der zugehörigen Felge überlappt.

JP-A- 2007-160983 zeigt einen Fahrzeugluftreifen, wobei der Reifen einen Wulst aufweist, der so ausgebildet ist, dass er im Anlagebereich des Felgenhornes oberhalb des Wulstkernes im auf der Felge montierten, unbelasteten Zustand nicht mit der Felge überlappt. Die Aussenkontur des Wulstes weist einen S-förmigen Verlauf auf. Einen ähnlichen Verlauf des Wulstes im Anlagebereich des Felgenhornes zeigt auch JP-A- 06-312605. Weiter ist aus JP-A- 54-108302 ein gattengsgemäßer Fahrzeugluftreifen mit einem Wulst bekannt, der im Anlagebereich des Felgenhornes oberhalb des Wulstkernes im auf der Felge montierten, unbelasteten Zustandes nicht mit der Felge überlappt.

Auf unebenen Fahrbahnen können bei Fahrzeugluftreifen aufgrund der Verformung des Reifens beim Abrollen Stöße auftreten, die zu einer Relativbewegung zwischen Reifen und Felge, insbesondere zwischen Reifenwulst und zugehörigem Sitzbereich der Felge führen. Eine solche Bewegung beeinflusst das Lenkverhalten und die Stabilität des Fahrzeuges. Bei Notlaufreifen treten diese Effekte aufgrund der verstärkten Seitenwand in erhöhtem Maße auf.

Der Erfindung liegt die Aufgabe zugrunde, diesen Effekten entgegenzuwirken und einen Fahrzeugluftreifen anzugeben, dessen Lenkverhalten und Fahrstabilität verbessert ist.

Diese Aufgabe wird durch einen Fahrzeugreifen gemäß Anspruch 1 gelöst.

Die Erfindung beruht auf der Erkenntnis, dass die Relativbewegung zwischen Reifen und Felge vor allem auf Stöße zurückzuführen ist, die vom Felgenhorn auf die gengenüberliegende Kontaktfläche des Reifens übertragen werden, wobei diese Kräfte aufgrund der Überlappung zwischen Reifenwulst und Felgenhorn bei herkömmlichen Reifen im Wesentlichen auf einen Punkt konzentriert und daher entsprechend groß sind. Durch die erfindungsgemäß fehlende Überlappung wird eine solche Konzentration der Kräfte vermieden. Die vom Felgenhorn auf den Wulstbereich des Reifens ausgeübten Kräfte bei Verformung des abrollenden Reifens auf unebener Fahrbahn werden vielmehr über einen größeren Bereich verteilt. Dadurch kann der auf den Wulst aufgeübte

Impuls verringert und eine Relativbewegung zwischen Wulst und Felge zumindest reduziert werden.

Nach einer Ausgestaltung der Erfindung überlappt der Wulst im Sohlenbereich mit der zugehörigen Felge, wofür die Sohle des Wulstes mit der zugeordneten Sitzfläche der Felge insbesondere einen Winkel bildet. Die Überlappung im Sohlenbereich dient dazu, den Reifen auf der Felge festzulegen. Dies ist bei dem erfindungsgemäßen Reifen deshalb wichtig, weil die Überlappung im Bereich des Felgenhorns verringert ist.

Eine Überlappung zwischen Wulst und Felge kann dadurch erreicht werden, dass die Sohle des Wulstes mit der zugeordneten Sitzfläche der Felge einen Winkel bildet. Besonders bevorzugt ist es, wenn die Sohle mit der Sitzfläche ausgehend von der Ferse zunächst einen ersten Winkel und daran anschließend einen zweiten Winkel bildet, wobei der zweite Winkel größer ist als der erste Winkel. Hierdurch kann eine besonders gute Festlegung des Reifens auf der Felge erreicht werden. Als besonders vorteilhaft hat es sich außerdem herausgestellt, wenn der Übergang zwischen den beiden Winkeln etwa in der Mitte der Sohle angeordnet ist.

Nach einer weiteren Ausgestaltung der Erfindung weist der Wulst im Anlagebereich des Felgenhorns oberhalb des Wulstkerns im auf der Felge montierten, unbelasteten Zustand einen Abstand vom Felgenhorn auf. Beim Abrollen des Reifens und der dadurch hervorgerufenen Verformung legt sich der Wulst an das Felgenhorn an, ohne dass es zu einer übermäßigen, insbesondere punktuellen Kompression des Wulstes kommt. Dadurch werden punktuelle Kräfte auf den Wulst besonders gut vermieden.

Besonders vorteilhaft ist es, wenn der Wulst im Anlagebereich des Felgenhorns in Richtung vom Felgenhorn weg gekrümmt ausgebildet ist. Damit wird der Krümmung des Felgenhorns Rechnung getragen und ein gleichmäßiges Anlegen des Wulstes am Felgenhorn gefördert.

Der Krümmungsradius der Krümmung beträgt bevorzugt zwischen ca. 8 mm und ca. 13 mm, besonders bevorzugt ca. 9 mm. Bei üblichen Felgen hat sich dieser Krümmungsradius als besonders geeignet herausgestellt, um eine Kräfteverteilung zu erreichen und damit eine Relativbewegung zwischen Wulst und Felge zu vermeiden.

Nach einer weiteren Ausgestaltung der Erfindung weist die Außenkontur des Wulstes im Bereich des Felgenhorns eine reine S-Form auf. Diese Form gewährleistet einerseits ein gutes Anlegen des Wulstes an das Felgenhorn und vermeidet andererseits punktuelle Kräfte aufgrund komprimierter Wulstfersenbereiche, wie sie beispielsweise bei herkömmlichen Reifen mit Hörnern im Wulstbereich auftreten.

Der Abstand der beiden Maxima der S-Form in Richtung der Reifenachse gesehen beträgt bevorzugt zwischen ca. 1,5 mm und ca. 2 mm. Die sich daraus ergebende Tiefe der Ausnehmung oberhalb des Wulstkerns hat sich als besonders geeignet für eine gleichmäßige Anlage des Wulstes am Felgenhorn ausgestellt. Damit kann eine besonders gleichmäßige Kräfteverteilung und Verringerung von Relativbewegungen zwischen Wulst und Felge erreicht werden.

Ebenfalls als besonders geeignet hat es sich herausgestellt, wenn das Maximum der Krümmung des Wulstes einen Abstand zum Felgen-Eckpunktdurchmesser von ca. 12 mm bis ca. 14 mm aufweist. Bei herkömmlichen Felgen ist diese Position der Krümmung für eine gleichmäßige Anlage des Wulstes am Felgenhorn besonders geeignet.

Ein Ausführungsbeispiel der Erfindung ist in der Zeichnung dargestellt und wird nachfolgend beschrieben. Es zeigen, jeweils in schematischer Darstellung,
Fig. 1 den Wulstbereich eines erfindungsgemäßen Fahrzeugluftreifens in unmontiertem Zustand,
Fig. 2 den Wulstbereich eines erfindungsgemäßen Fahrzeugluftreifens in montiertem Zustand und gegenüber Fig. 1 vergrößertem Maßstab, und
Fig. 3 eine Darstellung entsprechend Fig. 2 eines herkömmlichen Fahrzeugluftreifens.

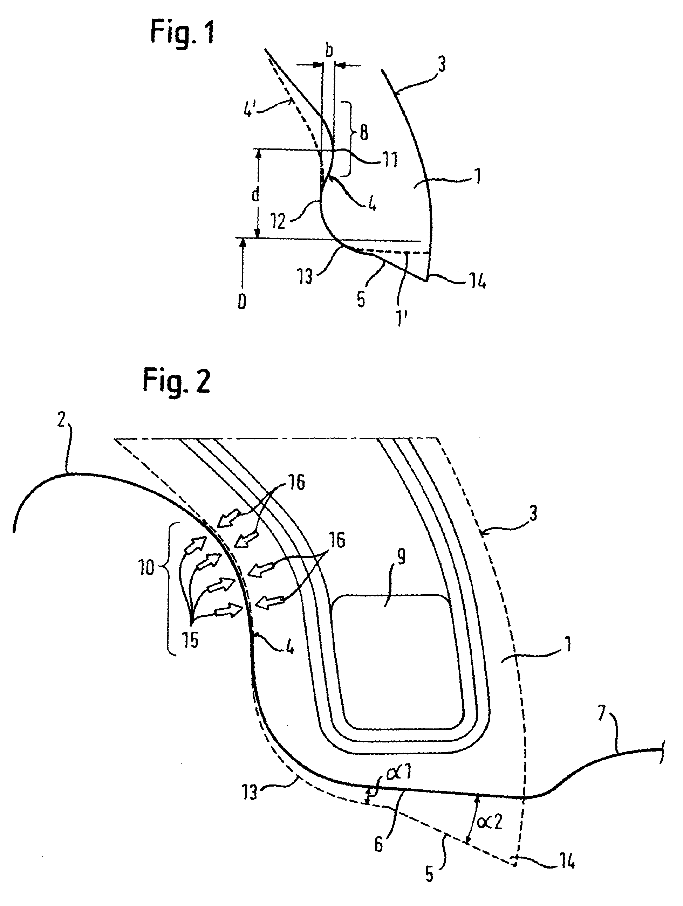

Der Wulstbereich eines erfindungsgemäßen Fahrzeugluftreifens ist in Fig. 1 in durchgezogener Linie dargestellt. Zum Vergleich ist der Verlauf des Wulstbereiches eines herkömmlichen Reifens gestrichelt dargestellt. Wie man sieht, stimmt die Kontur der dem Felgenhorn 2 (siehe Fig. 2) abgewandten Seite 3 des erfindungsgemäßen Reifenwulstes 1 mit der Kontur herkömmlicher Reifenwulste überein. Die dem Felgenhorn 2 zugewandte Seite 4 des Reifenwulstes 1 ist dagegen in Abweichung von herkömmlichen Reifenwulsten mit einer S-Form ausgebildet. Zudem verläuft die Sohle 5 des Reifenwulstes 1 unter einem Winkel zum zugeordneten Sitzbereich 6 der Felge 7. Und zwar verläuft die Sohle 5 des erfindungsgemäßen Wulstes ausgehend von der Wulstferse 13 zunächst unter einem ersten Winkel α1 und daran anschließend unter einem zweiten Winkel α2 zum Sitzbereich 6 bis zur Wulstzehe 14, wobei der erste Winkel α1 kleiner ist als der zweite Winkel α2 und sich der Übergang zwischen erstem Winkel α1 und dem zweiten Winkel α2 etwa in der Mitte der Sohle befindet.

Aufgrund der S-förmigen Kontur der dem Felgenhorn 2 zugewandten Seite 4 des erfindungsgemäßen Wulstes 1 ist die Seite 4 des Wulstes 1 mit einem gekrümmten Bereich 8 versehen. Der gekrümmte Bereich 8 befindet sich im Wesentlichen oberhalb des Wulstkerns 9 (siehe Fig. 2) und im Anlagebereich 10 des Felgenhorns 2, also in dem Bereich, in welchem die Seite 4 des Wulstes 1 bei Belastung des Reifens durch Abrollen zur Anlage kommt. Dementsprechend befindet sich das Maximum 11 des gekrümmten Bereiches 8 in einem Abstand d vom Felgen-Eckpunktdurchmesser D gemäß ETRTO, der bevorzugt ca. 12 mm bis ca. 14 mm beträgt. Der Krümmungsradius des gekrümmten Bereiches 8 beträgt bevorzugt ca. 8 mm bis ca. 13 mm, insbesondere ca. 9 mm, und der Abstand b zwischen dem Maximum 11 der Krümmung im oberen Bereich der S-Form und dem entgegengerichteten Maximum 12 im unteren Bereich der Krümmung beträgt bevorzugt zwischen ca. 1,5 mm und ca. 2 mm. Dadurch kann gewährleistet werden, dass sich die Seite 4 des Wulstes 1 bei Belastung des Reifens durch Abrollen gleichmäßig an den Anlagebereich 10 des Felgenhorns 2 anlegt. Wie mit Pfeilen 15 und 16 in Fig. 2 dargestellt, ergibt sich dadurch eine weitgehend gleichmäßige Verteilung von Stoßkräften, die beim Abrollen des Reifens auf unebener Fahrbahn auftreten. Aufgrund dieser Verteilung der Kräfte wird einer Relativbewegung zwischen Reifenwulst 1 und Felge 2 entgegengewirkt.

In Fig. 2 ist die Felge 7 in durchgezogenen Linien dargestellt. Strichliert ist außerdem die Kontur des Wulstes 1 in unmontiertem, aber unbelastetem Zustand eingetragen. Man sieht, dass der Wulst 1 im Bereich seiner Sohle 5 im montierten Zustand komprimiert wird, weil unmontierter Wulst 1 und Felge 7 einander überlappen. Dadurch ergibt sich eine Haltekraft zwischen Reifenwulst 1 und Felge 7. Im Anlagebereich 10 des Felgenhorns 2 liegt dagegen auch im belasteten Zustand keine oder nur eine geringe Komprimierung vor. Dies folgt daraus, dass die Seite 4 des Wulstes 1 im Bereich 8, der dem Anlagebereich 10 des Felgenhorns 2 gegenüberliegt, im unbelasteten Zustand vom Felgenhorn 2 beabstandet ist und sich bei Belastung an den Anlagebereich 10 gleichmäßig anlegt. Eine Überlappung zwischen Wulst 1 und Felgenhorn 2 ist in diesem Bereich also nicht gegeben.

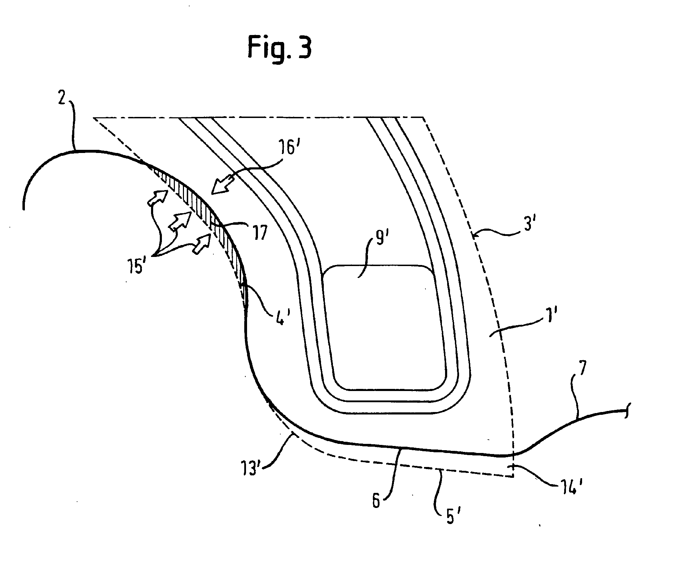

Bei dem in Fig. 3 dargestellten herkömmlichen Reifen ist dagegen zumindest in belastetem Zustand eine Überlappung gemäß dem schraffierten Bereich 17 gegeben. Dadurch wird der Wulst 1' hier komprimiert, wodurch punktuelle Kräfte gemäß Pfeil 16' beim Abrollen des Reifens auf unebener Fahrbahn entstehen können.

### Bezuaszeichenliste

- 1, 1': Wulst
- 2: Felgenhorn
- 3, 3': Seite von 1
- 4, 4': Seite von 1
- 5, 5': Sohle
- 6: Felgensitz
- 7: Felge
- 8: Bereich
- 9, 9': Wulstkern
- 10: Bereich
- 11: Maximum
- 12: Maximum
- 13, 13': Wulstferse
- 14, 14': Wulstzehe
- 15, 15': Pfeil
- 16, 16': Pfeil
- 17: Überlappungsbereich

- b: Abstand
- d: Abstand
- D: Felgen-Eckpun ktdurchmesser

- α1: erster Winkel
- α2: zweiter Winkel

## Patentansprüche

1. Fahrzeugluftreifen mit einer Karkasse, einem Laufstreifen und zwei jeweils einen Wulstkern (9) aufweisenden Reifenwulsten (1), die zur Festlegung des Reifens in einer zugeordneten Felge (7) ausgebildet sind, indem die Wulste (1) mit der zugehörigen Felge (7) überlappen, wobei mindestens ein Wulst (1) so ausgebildet ist, dass er im Anlagebereich (10) des Felgenhornes (2) oberhalb des Wulstkerns (9) im auf der Felge (7) montierten, unbelasteten Zustand nicht mit der Felge (7) überlappt, und wobei die Außenkontur des Wulstes (1) auf der dem Felgenhorn (2) zugewandten Seite im Bereich des Felgenhornes (2) eine S-Form aufweist, **dadurch gekennzeichnet, dass** der Abstand (b) der beiden Maxima (11, 12) der S-Form in Richtung der Reifenachse zwischen ca. 1,5 und ca. 2 mm beträgt.

2. Fahrzeugluftreifen nach Anspruch 1,
**dadurch gekennzeichnet, dass**
der Wulst (1) im Bereich seiner Sohle (5) mit der zugehörigen Felge (7) überlappt.

3. Fahrzeugluftreifen nach Anspruch 2,
**dadurch gekennzeichnet, dass**
die Sohle (5) des Wulstes (1) mit der zugeordneten Sitzfläche (6) der Felge (7) einen Winkel (α) bildet.

4. Fahrzeugluftreifen nach Anspruch 3,
**dadurch gekennzeichnet, dass**
die Sohle (5) mit der Sitzfläche (6) ausgehend von der Ferse (13) zunächst einen ersten Winkel (α1) und daran anschließend einen zweiten Winkel (α2) bildet, wobei der zweite Winkel (α2) größer ist als der erste Winkel (α1).

5. Fahrzeugluftreifen nach Anspruch 4,
**dadurch gekennzeichnet, dass** der Übergang zwischen erstem Winkel (α1) und zweitem Winkel (α2) etwa in der Mitte der Sohle (5) angeordnet ist.

6. Fahrzeugluftreifen nach einem der vorhergehenden Ansprüche,
**dadurch gekennzeichnet, dass**
der Wulst (1) im Anlagebereich (10) des Felgenhorns (12) oberhalb des Wulstkerns (9) im auf der Felge (7) montierten, unbelasteten Zustand vom Felgenhorn (2) einen Abstand aufweist.

7. Fahrzeugluftreifen nach einem der vorhergehenden Ansprüche,
**dadurch gekennzeichnet, dass**
der Wulst (1) im Anlagebereich (10) des Felgenhorns (2) in Richtung vom Felgenhorn (12) weg gekrümmt ausgebildet ist.

8. Fahrzeugluftreifen nach Anspruch 7,
**dadurch gekennzeichnet, dass**
die Krümmung so ausgbebildet ist, dass sich der Wulst (1) bei Belastung des Reifens gleichmäßig an den Anlagebereich (10) des Felgenhorns (2) anlegt.

9. Fahrzeugluftreifen nach Anspruch 7 order 8,
**dadurch gekennzeichnet, dass**
die Krümmung einen Krümmungsradius von ca. 8 mm bis ca. 13 mm, insbesondere ca. 9 mm, aufweist.

10. Fahrzeugluftreifen nach einem der vorhergehenden Ansprüche,
**dadurch gekennzeichnet, dass** die S-Form eine reine S-Form ist.

11. Fahrzeugluftreifen nach einem der vorhergehenden Ansprüche,
**dadurch gekennzeichnet, dass**
das obere Maximum (11) der Krümmung einen Abstand (d) zum Felgen-Eckpunktdurchmesser (D) von ca. 12 mm bis ca. 14 mm aufweist.

12. Fahrzeugluftreifen nach Anspruch 1, wobei der Fahrzeugluftreifen ein Notlaufreifen ist.

## Claims

1. A pneumatic vehicle tire, having a carcass, a tread, and two tire beads (1), each having a respective bead core (9), which are configured for fixing the tire in an associated wheel rim (7) by the fact that the beads (1) overlap with the associated wheel rim (7), wherein at least one bead (1) is designed in such a way that in the nonloaded state mounted on the wheel rim (7) the bead (1) does not overlap with the wheel rim (7) in the contact region (10) of the wheel rim flange (2) above the bead core (9), and wherein the outer contour of the bead (1) has a S-shape in the region of the wheel rim flange (2) on the side facing the wheel rim flange (2), **characterized in that** the distance (b) between the two maxima (11, 12) of the S-shape in the direction of the tire axis is between approximately 1.5 mm and approximately 2 mm.

2. The pneumatic vehicle tire according to claim 1, **characterized in that** the bead (1) overlaps with the associated wheel rim (7) in the region of the base (5) of the bead.

3. The pneumatic vehicle tire according to claim 2, **characterized in that** the base (5) of the bead (1) defines an angle (α) relative to the associated seating surface (6) of the wheel rim (7).

4. The pneumatic vehicle tire according to claim 3, **characterized in that** the base (5) defines relative to the seating surface (6), starting from the heel (13), initially a first angle (α1) and then subsequently a second angle (α2), wherein the second angle (α2) is greater than the first angle (α1).

5. The pneumatic vehicle tire according to claim 4, **characterized in that** the transition between the first angle (α1) and the second angle (α2) is situated approximately in the middle of the base (5).

6. The pneumatic vehicle tire according to one of the previous claims, **characterized in that** in the nonloaded state mounted on the wheel rim (7) the bead (1) in the contact region (10) of the wheel rim flange (12) above the bead core (9) is separated at a distance from the wheel rim flange (2).

7. The pneumatic vehicle tire according to one of the previous claims, **characterized in that** the bead (1) is curved away from the wheel rim flange (12) in the contact region (10) of the wheel rim flange (2).

8. The pneumatic vehicle tire according to claim 7, **characterized in that** the curvature is designed in such a way that the bead (1) uniformly contacts the contact region (10) of the wheel rim flange (2) when the tire is under load.

9. The pneumatic vehicle tire according to claim 7 or 8, **characterized in that** the curvature has a radius of curvature of approximately 8 mm to approximately 13 mm, particularly approximately 9 mm.

10. The pneumatic vehicle tire according to one of the previous claims, **characterized in that** the S-shape is a pure S-shape.

11. The pneumatic vehicle tire according to one of the previous claims, **characterized in that** the upper maximum (11) of the curvature has a distance (d) of approximately 12 mm to approximately 14 mm from the specified rim diameter (D) of the wheel rim.

12. The pneumatic vehicle tire of claim 1, wherein the pneumatic vehicle tire is a run-flat tire.

## Revendications

1. Bandage pneumatique pour véhicule, comprenant une carcasse, une bande de roulement et deux talons de bandage pneumatique (1) présentant respectivement une tringle de talon (9), qui sont réalisés pour fixer le bandage pneumatique dans une jante correspondante (7), les talons (1) recouvrant la jante correspondante (7), dans lequel au moins un talon (1) est réalisé de telle sorte que, dans la zone de contact (10) du rebord de jante (2) au-dessus de la tringle de talon (9) à l'état non chargé, monté sur la jante (7), il ne recouvre pas la jante (7), et dans lequel le contour externe du talon (1) présente, sur le côté tourné vers le rebord de jante (2) dans la zone du rebord de jante (2), une configuration qui prend la forme d'un S, **caractérisé en ce que** la distance (b) s'étendant entre les deux maxima (11, 12) de la forme d'un S dans la direction de l'axe du bandage pneumatique se situe entre environ 1,5 et environ 2 mm.

2. Bandage pneumatique pour véhicule selon la revendication 1, **caractérisé en ce que** le talon (1) recouvre, dans la zone de son bout (5), la jante correspondante (7).

3. Bandage pneumatique pour véhicule selon la revendication 2, **caractérisé en ce que** le bout (5) du talon (1) forme, avec la surface d'appui correspondante (6) de la jante (7), un angle (α).

4. Bandage pneumatique pour véhicule selon la revendication 3, **caractérisé en ce que** le bout (5) forme, avec la surface d'appui (6), à partir du talon (13), d'abord un premier angle (α1) et, directement après, un deuxième angle (α2), le deuxième angle (α2) étant supérieur au premier angle (α1).

5. Bandage pneumatique pour véhicule selon la revendication 4, **caractérisé en ce que** la transition entre le premier angle (α1) et le deuxième angle (α2) est disposée approximativement au milieu du bout (5).

6. Bandage pneumatique selon l'une quelconque des revendications précédentes, **caractérisé en ce que** le talon (1) dans la zone de contact (10) du rebord de jante (12), au-dessus de la tringle de talon (9), à l'état non chargé, monté sur la jante (7), présente un écart.

7. Bandage pneumatique selon l'une quelconque des revendications précédentes, **caractérisé en ce que** le talon (1) dans la zone de contact (10) du rebord de jante (2) est réalisé en une configuration courbe dans la direction qui s'éloigne du rebord de jante (12).

8. Bandage pneumatique pour véhicule selon la revendication 7, **caractérisé en ce que** la courbure est réalisée de telle sorte que le talon (1), lorsque le bandage pneumatique est soumis à une charge, vient se disposer de manière uniforme contre la zone d'appui (10) du rebord de jante (2).

9. Bandage pneumatique pour véhicule selon la revendication 7 ou 8, **caractérisé en ce que** la courbure présente un rayon de courbure d'environ 8 mm à environ 13 mm, en particulier d'environ 9 mm.

10. Bandage pneumatique selon l'une quelconque des revendications précédentes, **caractérisé en ce que** la forme d'un S est la forme d'un vrai S.

11. Bandage pneumatique selon l'une quelconque des revendications précédentes, **caractérisé en ce que** le maximum supérieur (11) de la courbure présente un écart d'environ 12 mm à environ 14 mm par rapport au diamètre de jante spécifié (D).

12. Bandage pneumatique pour véhicule selon la revendication 1, dans lequel le bandage pneumatique pour véhicule est un bandage pneumatique de secours.
